# EUROPÄISCHE PATENTSCHRIFT

(11) **EP 1 251 062 B1**
(45) Veröffentlichungstag und Bekanntmachung des Hinweises auf die Patenterteilung: **14.06.2006**
(21) Anmeldenummer: 02008816.7
(22) Anmeldetag: 19.04.2002
(51) Int. Cl.: B62D 25/20, B62D 35/02, B60R 13/08

(54) **Unterbodenverkleidung**
Underbody cowling
Habillage de bas de caisse

(30) Priorität: 20.04.2001 DE 10119663; 24.11.2001 DE 10157838
(43) Veröffentlichungstag der Anmeldung: 23.10.2002
(73) Patentinhaber: Carcoustics Tech Center GmbH, 51381 Leverkusen (DE)
(72) Erfinder: Brück, Eduard, 51381 Leverkusen (DE); Cucchiara, Salvatore, 51399 Burscheid (DE)
(74) Vertreter: Cohausz & Florack

(56) Entgegenhaltungen:
- EP-A- 0 454 949
- DE-A- 4 319 281
- FR-A- 2 482 548

## Beschreibung

Die Erfindung betrifft eine Unterbodenverkleidung eines Kraftfahrzeuges gemäß dem Oberbegriff des Anspruchs 1.

Ein Unterboden eines Kraftfahrzeuges, sich erstreckend von dem Motorraum bis hin unter den Kofferraum, ist herkömmlich durch das Bodenblech des Kraftfahrzeuges gebildet. Dieser ist außenseitig noch mit PVC beschichtet, um eine Beanspruchung durch Steinschlag abzumildern.

Es ist bereits bekannt, doppelwandige Absorber für eine Motorraumkapselung auszubilden, wozu bspw. auf die DE 4011 705 C2 und die DE 8117 883 U1, darüber hinaus auch auf die DE 9215132 U1 zu verweisen ist.

Die GB-A-676,423 offenbart eine Heizvorrichtung, die am Bodenblech eines Kraftfahrzeuges montiert ist und der Erwärmung des Bodenblechs unter Verwendung von Luft dient, die zuvor über das Abgasrohr geleitet wurde. Die Vorrichtung hat einen doppelwandigen Aufbau mit einer schalenförmigen Unterwand und einer gewellten Oberwand, wobei die Unterwand eine im wesentlichen glatte Unterfläche aufweist und damit eine strömungsangepasste Unterfläche überdeckend zu dem Bodenblech des Kraftfahrzeuges bildet.

Aus dem Dokument JP-A-0413175 ist eine Unterbodenverkleidung eines Kraftfahrzeuges bekannt, die der Reduzierung des Luftwiderstandes dient und einen im Bodenblech des Kraftfahrzeuges ausgebildeten Tunnel abdeckt, in welchem ein Abschnitt des Auspuffstranges angeordnet ist. Diese Unterbodenverkleidung besteht aus mehreren verschiebbar gelagerten Abdeckplatten, die bei Erreichen einer bestimmten Fahrgeschwindigkeit mittels eines Öffnungs-und Schließmechanismus in eine Verschlussstellung verfahren werden, um den Bodenblechtunnel zu verschließen.

Aus der DE 43 19 281 A1 ist ein plattenförmiges Unterbodenverkleidungsteil für Kraftfahrzeuge bekannt, das ebenfalls der Reduzierung des Luftwiderstandes dient und hierzu mit wenigstens einem Einlass versehen ist, der die Form eines so genannten NACA-Einlasses aufweist.

Eine weitere aerodynamisch wirksame Unterbodenverkleidung für Kraftfahrzeuge ist aus der FR-A-2482548 bekannt. Diese bekannte Unterbodenverkleidung besteht aus einer oder mehreren aneinandergereihten Profilplatten, die mehrere parallel zueinander verlaufende Längskanäle aufweisen. Die Profilplatten sind einwandig ausgebildet und mit Inspektionsöffnungen als Zugang für bestimmte Elemente des Kraftfahrzeuges, wie z.B. Ölablassschrauben, versehen.

Der vorliegenden Erfindung liegt die Aufgabe zugrunde, eine Vorrichtung zu schaffen, die zur Kühlung des Motors bzw. Motorraumes eines Kraftfahrzeuges beiträgt und sich relativ kostengünstig realisieren lässt.

Diese Aufgabe wird erfindungsgemäß durch eine Unterbodenverkleidung mit den Merkmalen des Anspruchs 1 gelöst.

Das erfinderische Konzept sieht vor, zusätzlich zu dem Bodenblech des Kraftfahrzeuges dieses unterfangend und in Überdeckung hierzu angeordnet eine Unterbodenverkleidung vorzusehen. Diese Unterbodenverkleidung ist doppelwandig aufgebaut, besteht also aus einer Unterwand und einer Oberwand, wobei die Unterwand eine strömungsangepasste Unterfläche überdeckend zu dem Kfz-Boden bildet. Strömungsangepasst kann hier zunächst bedeuten, dass die Unterwand außenseitig glattflächig ausgebildet ist. Es kann aber auch bedeuten, dass eine gewisse strömungsleitende Strukturierung, etwa mit Strömungskanälen in Längsrichtung, ausgeformt ist. Darüber hinaus können diese Strömungskanäle auch abweichend von einem graden Verlauf dann divergieren oder konvergieren in Bezug auf eine Fahrzeuglängsachse.

Eine solche Unterbodenverkleidung kann in verschiedenster Weise hergestellt sein. Beispielsweise in Form von Steg-Doppelplatten, also Platten, die jeweils einen Steg abragend von der Plattenfläche aufweisen und so gegeneinander gesetzt sind unter Bildung eines Hohlraums. Weiter kann sie im sogenannten "Twin-Sheet-Prozess" ausgebildet sein. Bevorzugt ist eine Ausbildung als Extrusions-Blasteil, entsprechend dem Extrusions-Blasformprozess.

Darüber hinaus ist auch eine Herstellung in der Vakuumformtechnik in Bezug auf Einzelflächen, die dann wiederum zum Doppelboden zusammengesetzt werden, möglich. Hierbei kann eine Ultraschall- oder Vibrationsverschweißung zur Verbindung der Einzelteile vorgesehen sein. Eine solche Verbindung kann im Übrigen bei einem Vorgehen mit den genannten Steg-Doppelplatten desgleichen vorgesehen sein. Auch beim Vorgehen im "Twin-Sheet-Prozess".

Von besonderer Bedeutung ist, dass die erfindungsgemäße Unterbodenverkleidung mindestens ein Funktionselement beinhaltet. Dabei handelt es sich um mindestens einen sich in Fahrzeuglängsrichtung erstreckenden Luftkanal, der eine dem Motorraum des Kraftfahrzeuges zugeordnete Absaugöffnung aufweist und mit einer in der Unterwand der Unterbodenverkleidung ausgebildeten, dem rückwärtigen Ende des Fahrzeuges zugeordneten Auslassöffnung versehen ist, so dass durch den unterhalb der Unterbodenverkleidung während des Fahrens entstehenden Unterdruck aus dem Motorraum Luft abgesaugt wird.

Weiter können auch in der Unterbodenverkleidung, insbesondere der Oberwand, Aufnahmen ausgeformt sein, in welche Funktionsteile, wie beispielsweise Teile einer Klimaanlage oder Elektroteile, eingesetzt werden. Durch die Anbringung, in der Regel Verschraubung, der Unterbodenverkleidung an dem Boden des Kraftfahrzeuges werden derartige Einsatzelemente dann ohne dass weitere Maßnahmen erforderlich sind auch sogleich formschlüssig zwischen der Unterbodenverkleidung und dem Boden des Kraftfahrzeuges gehaltert.

In die Oberwand der Unterbodenverkleidung kann im Weiteren auch ein Schallabsorber integriert sein.

Der Schallabsorber, gegebenenfalls ein Schallabsorber-Abschnitt kann kästenchenartig ausgebildet sein. Auch können die Kästchen oder die Oberwand allgemein Durchbrüche aufweisen im Sinne eines bzw. zur Bildung eines Helmholzresonators.

Es ist insbesondere vorgesehen, dass zwischen dem Bodenteil d.h. der Unterwand, und dem Strukturteil, d. h. der Oberwand, im Bereich der Hohlkammern Verschweißungen zwischen den Kammerwänden des Strukturteils und dem Bodenteil ausgebildet sind. Die Verschweißungen können punkt- oder linienartig verlaufen. Die Hohlkammern sind so ausgebildet, dass deren Kammerwände bei im Wesentlichen gleicher Höhenerstreckung teilweise mit dem Bodenteil verschweißt sind und teilweise freikragend auf das Bodenteil zugerichtet sind, unter Belassung eines Luftspaltes zwischen einer Stirnfläche der Kammerwand und dem Bodenteil.

Es kann ein teilweise integraler randseitiger Übergang zwischen dem Bodenteil und dem Strukturteil ausgebildet sein. Ein solcher Übergang ermöglicht es, die Unterbodenverkleidung mit dem Schallabsorber insgesamt aus einem schlauchartigen Rohrteil, bevorzugt im Blasverfahren, zu fertigen. Hierbei kann der Übergang auch im nachfolgenden Verfahrensabschnitt abgeschnitten sein. Dadurch, dass zwischen den Kammerwänden des Strukturteils und dem Bodenteil über den Flächenbereich des Schall-Absorbers verteilt Verschweißungen ausgebildet sind, ergibt sich eine hohe Stabilität. Einerseits durch die verbleibenden beabstandeten Wände des Strukturteils in Bezug auf das Bodenteil und andererseits eben durch die zwischengeschalteten Verschweißungen, welche auch Ausknickungen weitgehend verhindern. Dadurch, dass gleichwohl alle Hohlkammern einem gemeinsamen, zwischen dem Strukturteil und dem Trägerteil eingeschlossenen Luftraum zugehören, ist auch schalltechnisch eine vorteilhafte Ausbildung geschlossen. Es ergibt sich durch die verbleibenden, im Querschnitt relativ kleinen Verbindungsöffnungen eine merkliche Reibungsbeeinflussung bei Schallbeaufschlagung des gemeinsamen Luftraumes. In Ausgestaltung kann vorgesehen sein, dass die Verschweißungen inselartig verlaufen. Wenn dieses auch bevorzugt ist, so kann auch grundsätzlich vorgesehen sein, dass Verschweißungen, hauptsächlich linienartig, sich von den jeweiligen Rändern ausgehend bis zu einem mittleren Bereich des Schall-Absorbers erstrecken, wobei die Verschweißungen bzw. Schweißlinien nicht ineinander übergehen, sondern versetzt zueinander auslaufen. Insbesondere im Hinblick auf die angesprochenen inselartigen Verschweißungen ist ohnehin bevorzugt vorgesehen, dass die Verschweißungen versetzt zueinander angeordnet sind. Es kann auch weiter vorgesehen sein, dass die linienartigen Verschweißungen rechtwinklig zueinander verlaufen, aber in der Regel bzw. nicht unbedingt aufeinander treffen. Es sind aber auch stumpf aufeinanderstoßende Verschweißungen möglich. Sowohl bei den inselartigen Verschweißungen wie auch bei den von Randseiten des Schall-Absorbers ausgehenden, versetzt zueinander verlaufenden Verschweißungen, ergibt sich, dass die Hohlkammern in aller Regel nach unten offen sind, d. h. dass das Bodenteil eine Hohlkammer nie vollständig verschließt. Es ist jedoch möglich, dass eine Hohlkammer, bis zu dreiseitig hin, bei dem bevorzugt angegebenenrechteckigen bzw. quadratischen Grundriss einer Hohlkammer, durch Verschweißungen verschlossen ist. Hinsichtlich der Hohlkammern kann auch vorgesehen sein, dass diese unterschiedliche Größen aufweisen. Dies kann sich einerseits auf die Abstände der - senkrechten - Kammerwände einer Hohlkammer in ebener Richtung beziehen, andererseits auch auf die Höhe der Hohlkammern. Besonders bevorzugt ist es, im Zusammenhang mit dem verbleibenden Luftspalt zwischen einer Stirnfläche einer Wand einer Hohlkammer und dem gegenüberliegenden Bodenteil, dass eine relativ große Hohlkammer von einer Mehrzahl von kleinen Hohlkammern umgeben ist. Die oberen Abschlusswände können gleichfalls in unterschiedlicher Höhe angeordnet sein. Bei den kleineren Hohlkammern ist hierbei bevorzugt, dass die oberen Abschlusswände zugleich auch auf einem niedrigeren Höhenniveau angeordnet sind als bei den großen Hohlkammern. Das Ausgangsmaterial kann bspw. Propylen, bevorzugt mit Glasfaser versetzt, sein. Es ist auch weiterhin bevorzugt, dass bei integralem Übergang zwischen dem Bodenteil und dem Strukturteil das Bodenteil und das Strukturteil unterschiedliche (Ausgangs-) Wandstärken aufweisen. Im Hinblick auf die bereits weiter oben angesprochene schlauchartige Ausgangsgestaltung des Materials für das Bodenteil und das Strukturteil besitzt ein solcher Schlauchabschnitt entsprechend über seinen Umfang unterschiedliche Wandstärken. Dies kann bspw. im Extrusionsverfahren erreicht sein. Es ist auch von Bedeutung, dass es sich um ein Gesamt-Bauteil handelt, das im Extrusions-Blasformverfahren hergestellt ist. Es liegt herstellungsmäßig Einteiligkeit vor, wenn auch diese nicht immer beim fertigen Produkt ohne weiteres erkennbar ist. Von Bedeutung ist weiterhin, dass die Hohlkammern derart versetzt zueinander angeordnet sind, dass sich jedenfalls nicht in einer Haupt-Längsrichtung oder in einer Haupt-Querrichtung, weiter bevorzugt im Wesentlichen in keiner Richtung des Schall-Absorbers bzw. der Unterbodenverkleidung insgesamt eine durchgehende Knicklinie ergeben kann. Eine solche Gestaltung ist weiterhin auch für eine integrale Stabilität des Gesamt-Schall-Absorbers von Bedeutung. Dies auch im Hinblick auf die beschriebenen Wände der Hohlkammern, die frei nach unten kragend, jedoch ohne das Bodenteil zu berühren, ausgebildet sind.

Auch durch eine betriebsmäßig sehr starke Schwingungsbeanspruchung kann es nicht zu einem Aufeinanderschlagen der freikragenden Kammerwände und dem Bodenteil kommen, selbst bei schalltechnisch optimal geringer Einstellung des verbleibenden Luftspaltes.

Von weiterer Bedeutung ist auch eine Ausgestaltung des Schall-Absorbers, bzw. des entsprechenden Abschnitts der Unterbodenverkleidung, bei welchem in dem Strukturteil und dem Bodenteil übereinstimmende Knicklinien ausgebildet sind, zur Abknickung eines Unterbodenverkleidungs- bzw. Absorber-Teilbereiches. Auf diese Art lässt sich bei weiterhin integraler Ausbildung des Schall-Absorbers bzw. der Unterbodenverkleidung insgesamt eine formmäßige Gesamtanpassung bspw. an einen Unterboden eines Kraftfahrzeuges erreichen. Auch hierbei können die Luftvolumina in den einzelnen Teilbereichen zusammen verbunden sein. Darüber hinaus ist es aber auch möglich, dass an einer Knicklinie insoweit eine Unterbrechung ausgebildet ist und ein Absorber-Teilbereich jeweils dann ein isoliertes Luftvolumen aufweist. Die Knicklinien können insbesondere filmgelenkartig ausgebildet sein. Darüber hinaus ist bevorzugt, dass der abgeknickte Absorber-Teilbereich mit dem weiteren Teilbereich des Schall-Absorbers fest verbunden ist. Es können Verschweißungen an aufeinander treffenden Hohlkammern ausgebildet sein. Darüber hinaus aber auch Verklebungen oder Verschraubungen. Soweit vorstehend von Verschweißungen gesprochen ist, können diese auch jeweils, auch bezüglich der Verbindung zwischen dem Strukturteil und dem Bodenteil, in einer weiteren Ausgestaltung, durch Verklebungen ersetzt sein, wenn auch Verschweißungen bevorzugt sind. Des Weiteren kann das vorstehend als Bodenteil beschriebene Teil auch als Trägerteil bzw. als weiteres Strukturteil angesprochen werden.

Im Weiteren kann bei der Unterbodenverkleidung, integriert zwischen Oberwand und Unterwand, auch ein Reservoir etwa im Sinne eines Flüssigkeitsreservoirs, ausgebildet sein. Hierzu können dann Durchbrüche oder Löcher für Zu- und Ableitung vorgesehen sein.

Auch kann die Unterbodenverkleidung, insbesondere die Oberwand, Ausformungen zur Halterung von Kabeln oder Leitungen aufweisen. Weiter kann die Unterbodenverkleidung auch zugleich integriert mit einer Motorraumkapselung, zur Kapselung des Motors nach unten hin, ausgebildet sein. Insoweit würde dann die Unterbodenverkleidung das Kraftfahrzeug praktisch über die gesamte Länge unterseitig überdecken.

Die Unterbodenverkleidung kann auch in Bezug auf die Belüftung des Fahrzeuginnenraumes und/ oder eine Klimatisierung einbezogen werden. So können zur Kühlung Luftleitungen hindurchgeführt sein, die dann wiederum in das Fahrzeuginnere zurückführen. Auch kann so eine Luftleitungsführung von vorne nach hinten im Kraftfahrzeug verwirklicht sein. Wenn der Unterboden des Kraftfahrzeuges entsprechende Öffnungen aufweist, kann auch diese Unterbodenverkleidung insgesamt als "Klimaverkleidung" dienen, d. h. dass Luft, etwa gekühlte Luft, an einer Seite hineingeblasen wird und dann über ganzflächig verteilte Öffnungen von unten, den Unterboden des Kraftfahrzeuges durchsetzend, in den Innenraum des Kraftfahrzeuges abgegeben wird.

Von besonderer Bedeutung ist auch noch, dass bevorzugt diese Unterbodenverkleidung vollständig ohne Faserverstärkung, nur aus üblichem Kunststoff-Werkstoff, hergestellt sein kann.

Eine weitere bevorzugte Ausgestaltung besteht darin, dass hinsichtlich Befestigungsstellen, die an der Unterbodenverkleidung zum Befestigen am Unterboden des Kraftfahrzeuges ausgebildet sind, diese in ihrer Anordnung so ausgewählt sind, dass sie an ein Schwingungsbild des Unterbodens des Kraftfahrzeuges angepasst angeordnet sind. Bevorzugt in dem Sinne, dass die Befestigungsstellen im Bereich einer größten Amplitude des Schwingungsbildes des Unterbodens des Kraftfahrzeuges bzw. des Gesamtfahrzeuges, abhängig von der tatsächlichen Befestigung, angeordnet sind.

Weiter ist es auch bevorzugt, dass die Befestigungsstellen an der Unterbodenverkleidung verstärkt ausgebildet sind. Insbesondere durch eine vergrößerte Wandstärke jedenfalls im Bereich der Befestigungsstellen,

Wenn auch hinsichtlich des Werkstoffes faserfreier Werkstoff bei gewissen Ausführungsformen bevorzugt ist, kann es sich jedoch auch empfehlen, gerade im Hinblick auf ein gewünschtes Dämpfungsverhalten, den Werkstoff mit einem möglichst hohen Verlustfaktor ausgewählt vorzusehen. Dies kann eben durch Fasern erreicht werden oder auch durch eine Mineralstofffüllung. Jedenfalls empfiehlt es sich in diesem Zusammenhang auch, eine möglichst hohe Dichte des Werkstoffes auszuwählen. Etwa mehr als 150 kg/m³, bis hin zu 400 kg/m³, wobei ein bevorzugter Bereich zwischen 200 und 250 kg/m³ anzusiedeln ist.

Hinsichtlich des Kunststoff-Basismaterials ist, wie auch bereits angesprochen, Polypropylen bevorzugt.

Nachstehend ist in Bezug auf die beigefügte Zeichnung, die lediglich ein Ausführungsbeispiel darstellt, die Erfindung noch im Einzelnen erläutert. Hierbei zeigt:
- Fig. 1: eine schematische Seitenansicht eines Kraftfahrzeuges mit einer Unterbodenverkleidung, zur Deutlichkeit im noch nicht montierten Zustand;
- Fig. 2: eine schematische perspektivische Ansicht einer Unterbodenverkleidung;
- Fig. 3: einen Querschnitt durch den Gegenstand gemäß Fig. 1, geschnitten entlang der Linie III-III;
- Fig. 4: einen Querschnitt durch den Gegenstand gemäß Fig. 1, geschnitten entlang der Linie IV-IV.

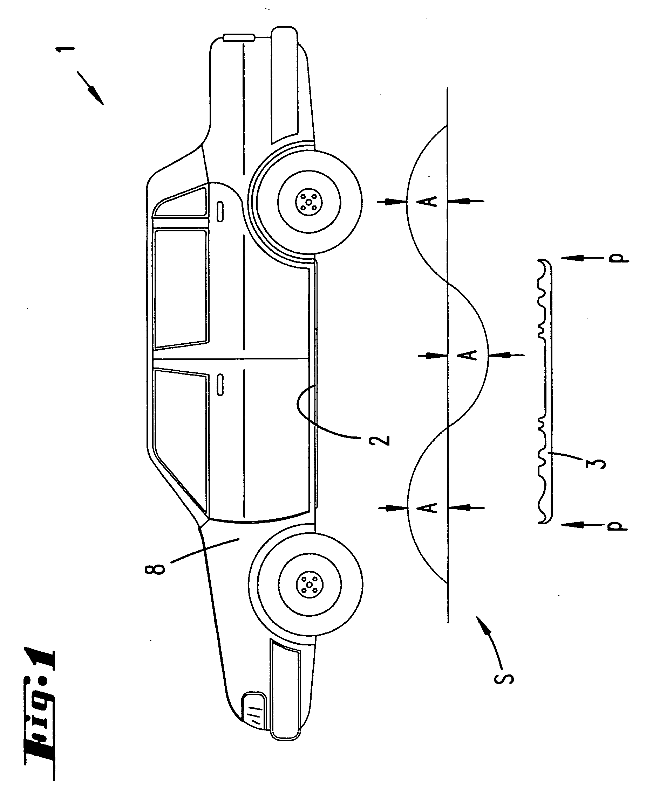

Dargestellt und beschrieben ist zunächst mit Bezug zu Fig. 1 ein Kraftfahrzeug 1 mit einem Unterboden 2. Unterhalb des Unterbodens 2 des Kraftfahrzeuges ist eine Unterbodenverkleidung 3 vorgesehen, welche bei der Darstellung der Fig. 1 noch nicht an dem Kraftfahrzeug angebracht ist. Entsprechend den Pfeilen p wird die Unterbodenverkleidung 3 an dem Boden 2 des Kraftfahrzeuges 1 angebracht, etwa durch Verschraubung.

Weiter sind die Befestigungsstellen der Unterbodenverkleidung 3, die im Einzelnen nicht dargestellt sind, bevorzugt so angeordnet, dass sie im Hinblick auf ein Schwingungsbild S des Unterbodens des Kraftfahrzeuges im Bereich einer größten Amplitude A angeordnet sind.

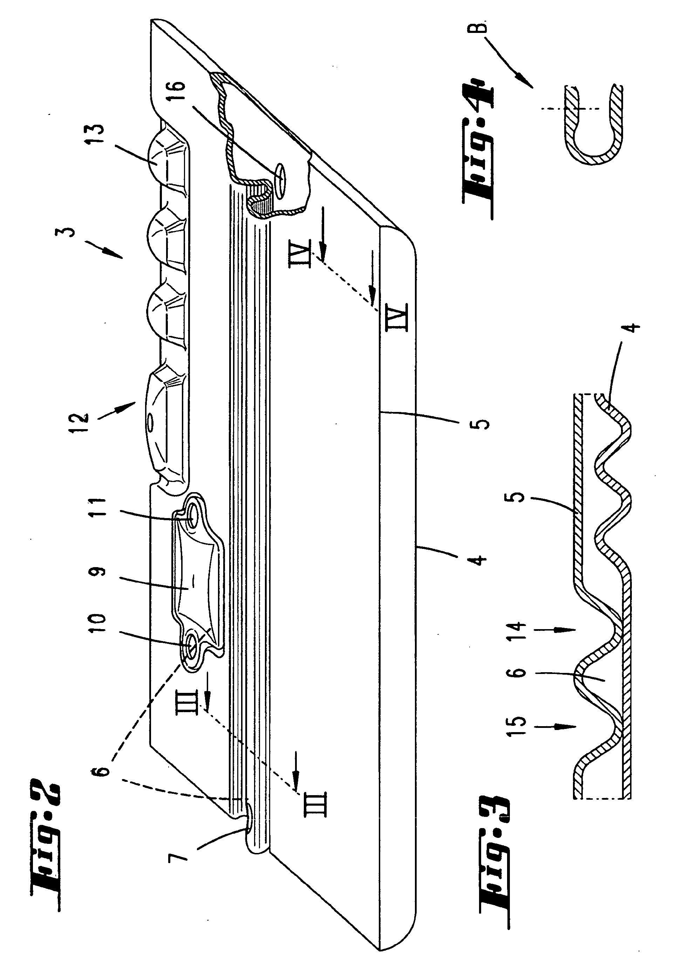

Mit Bezug zu den Fig. 2 und 3 ist zu erkennen, dass die Unterbodenverkleidung doppelwandig ausgebildet ist, nämlich aus einer Unterwand 4 und einer Oberwand 5 besteht. Beim Ausführungsbeispiel ist die Unterwand 4 unterseitig glattflächig ausgebildet, wohingegen die Oberwand 5 strukturiert ist und so auch Funktionsteile ausbildet, die nachstehend noch weiter erläutert sind.

Zunächst ist in die Unterbodenverkleidung 3 ein Luftkanal eingeformt mit einer Absaugöffniing 7. Die Absaugöffnung 7 ist dem Motorraum 8 des Kraftfahrzeuges 1 zugeordnet. Der Luftkanal 6 besitzt des Weiteren eine Auslassöffnung 16, die hier in dem Unterboden 4 der Unterbodenverkleidung 1 ausgebildet ist. Durch den im Zuge des Fahrens entstehenden Unterdruck entsteht ein Sog durch den Luftkanal 6, welcher die gewünschte Absaugung von Luft aus dem Motorraum erbringt.

Weiter ist in der Unterbodenverkleidung 3 ein Tank 9 ausgeformt, der durch eine sickenartige Einfalzung des Oberbodens 5 gebildet ist, vergleichbar der sickenartigen Einformung die zur Ausbildung des Luftkanals 6 geführt hat, wie nachstehend noch in Bezug auf Fig. 3 erläutert.

Der Tank 9 besitzt eine Einlassöffnung 10 und eine Auslassöffnung 11. Hieran können dann Schläuche bspw. angeschlossen werden. Der Tank kann etwa zur Aufnahme von Spritzwasser oder sonstigem dienen.

Weiter besitzt die Unterbodenverkleidung 3 einen Strukturabschnitt 12 der in Form von Resonatorelementen 13 geformt ist. In der Unterbodenverkleidung 3 ist somit integral auch eine Schallabsorbtion. Diese kann den Bereichen des Kfz-Bodens zugeordnet sein, die schalltechnisch besonders zu isolieren sind.

Wie aus Fig. 3 ersichtlich, lässt sich der Luftkanal 6 in einfacher Weise dadurch ausformen, dass der Oberboden 5 bei 14 und 15 sickenartig eingedellt ist und über die Länge dieser Sicken mit dem Unterboden 4 verschweißt ist. Die Öffnungen 7 bzw. 16 können dann etwa eingestanzt oder in sonstiger Weise ausgebildet werden.

In Fig. 4 ist in schematischer Ansicht ein Teilquerschnitt dargestellt, der die Unterbodenverkleidung im Bereich einer Befestigungsstelle B darstellt. Es ist zu erkennen, dass die Oberwandung im Bereich der Befestigungsstelle B verdickt ausgebildet ist. Sie kann hierzu auch über die gesamte Länge etwa verdickt ausgebildet sein, obwohl nur bereichsweise die Befestigung ausgebildet ist. Gleiches kann natürlich auch in Breitenrichtung gegeben sein.

## Patentansprüche

1. Doppelwandige Unterbodenverkleidung (3) für ein Kraftfahrzeug (1), mit einer Unterwand (4) und einer Oberwand (5), wobei die Unterwand (4) eine strömungsangepasste Unterfläche überdeckend zu einem Unterboden (2) des Kraftfahrzeuges bildet, und wobei zwischen der Oberwand (5) und der Unterwand (4) mindestens ein sich in Fahrzeuglängsrichtung erstreckender Luftkanal (6) ausgebildet ist,
**dadurch gekennzeichnet, dass** der Luftkanal (6) eine dem Motorraum (8) des Kraftfahrzeuges zugeordnete Absaugöffnung (7) aufweist und mit einer in der Unterwand (4) ausgebildeten, dem rückwärtigen Ende des Fahrzeuges zugeordneten Auslassöffnung (16) versehen ist, so dass durch den unterhalb der Unterbodenverkleidung (3) während des Fahrens entstehenden Unterdruck aus dem Motorraum (8) Luft abgesaugt wird.

2. Unterbodenverkleidung nach Anspruch 1,
**dadurch gekennzeichnet, dass** die Unterwand (4) außen glattflächig ausgebildet ist.

3. Unterbodenverkleidung nach Anspruch 1 oder 2,
**dadurch gekennzeichnet, dass** an der Unterwand (4) außenflächig eine strömungsleitende Strukturierung ausgebildet ist.

4. Unterbodenverkleidung nach einem der vorhergehenden Ansprüche,
**dadurch gekennzeichnet, dass** an der Unterwand (4) orientiert an einer Längsrichtung des Kraftfahrzeuges sich erstreckende Strömungskanäle ausgeformt sind.

5. Unterbodenverkleidung nach Anspruch 4,
**dadurch gekennzeichnet, dass** die Strömungskanäle in Längsrichtung des Kraftfahrzeuges divergieren.

6. Unterbodenverkleidung nach Anspruch 4,
**dadurch gekennzeichnet, dass** die Strömungskanäle in Längsrichtung des Kraftfahrzeuges konvergieren.

7. Unterbodenverkleidung nach einem der vorhergehenden Ansprüche,
**dadurch gekennzeichnet, dass** sie aus Steg-Doppelplatten besteht.

8. Unterbodenverkleidung nach einem der Ansprüche 1 bis 6,
**dadurch gekennzeichnet, dass** sie als Extrusions-Blasteil ausgebildet ist.

9. Unterbodenverkleidung nach einem der vorhergehenden Ansprüche,
**dadurch gekennzeichnet, dass** sie außer dem Luftkanal (6) weitere Funktionsteile beinhaltet.

10. Unterbodenverkleidung nach einem der vorhergehenden Ansprüche,
**dadurch gekennzeichnet, dass** darin eine Aufnahme ausgeformt ist, in welche ein Funktionsteil einsetzbar ist.

11. Unterbodenverkleidung nach Anspruch 10,
**dadurch gekennzeichnet, dass** die Aufnahme in der Oberwand (5) ausgebildet ist.

12. Unterbodenverkleidung nach Anspruch 10 oder 11,
**dadurch gekennzeichnet, dass** ein Funktionsteil mittels der Aufnahme durch Befestigung der Unterbodenverkleidung (3) an dem Kraftfahrzeug (1) zwischen einem Kraftfahrzeugboden (2) und der Unterbodenverkleidung (3) formschlüssig halterbar ist.

13. Unterbodenverkleidung nach einem der vorhergehenden Ansprüche,
**dadurch gekennzeichnet, dass** darin ein Schall-Absorber integriert ist.

14. Unterbodenverkleidung nach einem der vorhergehenden Ansprüche,
**dadurch gekennzeichnet, dass** in der Oberwand (5) ein Strukturabschnitt (12) ausgebildet ist, wobei in dem Strukturabschnitt (12) Hohlkammern (13) ausgebildet sind, welche Kammerwände aufweisen und kästchen- oder becherartig ausgebildet sind.

15. Unterbodenverkleidung nach Anspruch 14,
**dadurch gekennzeichnet, dass** die Hohlkammern (13) bei Abschluss nach außen einem gemeinsamen, zwischen der Oberwand (5) und der Unterwand (4) eingeschlossenen Luftvolumen angehören.

16. Unterbodenverkleidung nach Anspruch 14 oder 15,
**dadurch gekennzeichnet, dass** zwischen der Unterwand (4) und der Oberwand (5) im Bereich der Hohlkammern Verschweißungen zwischen den Kammerwänden des Strukturabschnittes (12) der Oberwand (5) und der Unterwand (4) ausgebildet sind.

17. Unterbodenverkleidung nach Anspruch 16,
**dadurch gekennzeichnet, dass** die Verschweißungen punkt- oder linienförmig verlaufen und dass Hohlkammern (13) ausgebildet sind, deren Kammerwände bei im Wesentlichen gleicher Höhenerstreckung teilweise mit der Unterwand (4) verschweißt sind und teilweise freikragend auf die Unterwand (4) zugerichtet sind, unter Belassung eines Luftspaltes zwischen einer Stirnfläche der Kammerwand und der Unterwand (4).

18. Unterbodenverkleidung nach einem der vorhergehenden Ansprüche,
**dadurch gekennzeichnet, dass** ein integraler randseitiger Übergang zwischen der Oberwand (5) und der Unterwand (4) ausgebildet ist.

19. Unterbodenverkleidung nach Anspruch 16 oder 17, **dadurch gekennzeichnet, dass** die Verschweißungen inselartig verlaufen.

20. Unterbodenverkleidung nach Anspruch 16, 17 oder 19,
**dadurch gekennzeichnet, dass** die Verschweißungen versetzt zueinander angeordnet sind.

21. Unterbodenverkleidung nach Anspruch 16,
**dadurch gekennzeichnet, dass** bei linienartigen Verschweißungen rechtwinklig zueinander angeordnete Verläufe ausgebildet sind.

22. Unterbodenverkleidung nach einem der Ansprüche 14 bis 21,
**dadurch gekennzeichnet, dass** die Hohlkammern (13) eine unterschiedliche Größe und/oder eine unterschiedliche Höhe aufweisen.

23. Unterbodenverkleidung nach einem der vorhergehenden Ansprüche,
**dadurch gekennzeichnet, dass** die Oberwand (5) und die Unterwand (4) unterschiedliche Wandstärken aufweisen.

24. Unterbodenverkleidung nach einem der vorhergehenden Ansprüche,
**dadurch gekennzeichnet, dass** in der Oberwand (5) und der Unterwand (4) übereinstimmende Knicklinien ausgebildet sind.

25. Unterbodenverkleidung nach Anspruch 24,
**dadurch gekennzeichnet, dass** die Knicklinien filmgelenkig ausgebildet sind.

26. Unterbodenverkleidung nach einem der vorhergehenden Ansprüche,
**dadurch gekennzeichnet, dass** sie eine verdickte Befestigungsstelle (B) aufweist.

27. Unterbodenverkleidung nach einem der vorhergehenden Ansprüche,
**dadurch gekennzeichnet, dass** ihr Werkstoff eine Dichte von mehr als 150 kg/m³ bis hin zu 400 kg/m³ aufweist.

28. Unterbodenverkleidung nach einem der vorhergehenden Ansprüche,
**dadurch gekennzeichnet, dass** ihr Werkstoff aus faser- und/oder mineralstoffgefülltem Kunststoff besteht.

## Claims

1. Double-walled underbody panelling (3) for a motor vehicle (1), comprising a bottom wall (4) and a top wall (5), wherein the bottom wall (4) forms a flow-adapted bottom surface covering an underbody (2) of the motor vehicle, and wherein between the top wall (5) and the bottom wall (4) at least one air duct (6) which extends in longitudinal direction of the motor vehicle is formed,
**characterised in that**
the air duct (6) comprises an suction aperture (7) that is associated with the engine compartment (8) of the motor vehicle, and comprises a outlet aperture (16) that is formed in the bottom wall (4) and that is associated with the rear end of the vehicle so that, as a result of the negative pressure that results underneath the underbody panelling (3) when the vehicle is in motion, air is sucked from the engine compartment (8).

2. The underbody panelling according to claim 1,
**characterised in that**
the bottom wall (4) is smooth on the outside.

3. The underbody panelling according to claim 1 or 2,
**characterised in that**
the outside of the bottom wall (4) comprises flow-guiding structuring.

4. The underbody panelling according to any one of the preceding claims,
**characterised in that**
oriented on the bottom wall (4), flow ducts that extend in longitudinal direction of the motor vehicle are formed.

5. The underbody panelling according to claim 4,
**characterised in that**
the flow ducts diverge in longitudinal direction of the motor vehicle.

6. The underbody panelling according to claim 4,
**characterised in that**
the flow ducts converge in longitudinal direction of the motor vehicle.

7. The underbody panelling according to any one of the preceding claims,
**characterised in that**
it comprises double web plates.

8. The underbody panelling according to any one of claims 1 to 6,
**characterised in that**
it is designed as an extrusion blow-moulded part.

9. The underbody panelling according to any one of the preceding claims,
**characterised in that**
apart from the air duct (6) it comprises further functional components.

10. The underbody panelling according to any one of the preceding claims,
**characterised in that**
in it a receptacle is formed into which a functional component can be inserted.

11. The underbody panelling according to claim 10,
**characterised in that**
the receptacle is formed in the top wall (5).

12. The underbody panelling according to claim 10 or 11,
**characterised in that**
by means of the receptacle, by attaching the underbody panelling (3) to the motor vehicle (1) a functional component can be mounted, so as to have positive fit, between a motor vehicle bottom (2) and the underbody panelling (3).

13. The underbody panelling according to any one of the preceding claims,
**characterised in that**
a sound absorber is integrated therein.

14. The underbody panelling according to any one of the preceding claims,
**characterised in that**
a structural section (12) is formed in the top wall (5), wherein in the structural section (12) there are hollow chambers (13) which comprise chamber walls and which are designed in a box-like or cup-like manner.

15. The underbody panelling according to claim 14,
**characterised in that**
the hollow chambers (13) are closed off towards the outside and form part of a common air volume that is enclosed between the top wall (5) and the bottom wall (4).

16. The underbody panelling according to claim 14 or 15,
**characterised in that**
between the bottom wall (4) and the top wall (5), in the region of the hollow chambers, there are welds between the chamber walls of the structural section (12) of the top wall (5) and of the bottom wall (4).

17. The underbody panelling according to claim 16,
**characterised in that**
the welds extend in spots or along lines, and **in that** hollow chambers (13) are formed, whose chamber walls at essentially identical height are partly welded to the bottom wall (4) and are partly facing the bottom wall (4) so as to form a free collar, while leaving an air gap between a face of the chamber wall and the bottom wall (4).

18. The underbody panelling according to any one of the preceding claims,
**characterised in that**
there is an integral transition on the margin side between the top wall (5) and the bottom wall (4).

19. The underbody panelling according to claim 16 or 17,
**characterised in that**
the welds extend in the manner of islands.

20. The underbody panelling according to claim 16, 17 or 19,
**characterised in that**
the welds are arranged so as to be offset in relation to each other.

21. The underbody panelling according to claim 16,
**characterised in that**
in the case of line-shaped welds, welds extending at right angles in relation to each other are formed.

22. The underbody panelling according to any one of claims 14 to 21,
**characterised in that**
the hollow chambers (13) differ in size and/or differ in height.

23. The underbody panelling according to any one of the preceding claims,
**characterised in that**
the wall thickness of the top wall (5) and of the bottom wall (4) is different.

24. The underbody panelling according to any one of the preceding claims,
**characterised in that**
there are matching buckling lines in the top wall (5) and in the bottom wall (4).

25. The underbody panelling according to claim 24,
**characterised in that**
the buckling lines are designed in the manner of film hinges.

26. The underbody panelling according to any one of the preceding claims,
**characterised in that**
it comprises a thickened attachment point (B).

27. The underbody panelling according to any one of the preceding claims,
**characterised in that**
the density of its material is in excess of 150 kg/m³ to 400 kg/m³.

28. The underbody panelling according to any one of the preceding claims,
**characterised in that**
its material comprises fibre-filled plastic and/or plastic filled with mineral material(s).

## Revendications

1. Habillage de dessous de caisse (3) à double paroi pour un véhicule automobile (1), avec une paroi inférieure (4) et une paroi supérieure (5), la paroi inférieure (4) formant une surface inférieure adaptée à l'écoulement recouvrant un dessous de caisse (2) du véhicule automobile, et au moins un canal de passage d'air (6), s'étendant dans la direction longitudinale du véhicule, étant formé entre la paroi supérieure (5) et la paroi inférieure (4),
**caractérisé en ce que** le canal de passage d'air (6) présente une ouverture d'aspiration (7) affectée au compartiment moteur (8) du véhicule et est muni d'une ouverture d'échappement (16) ménagée dans la paroi inférieure (4) et affectée à l'extrémité arrière du véhicule, de sorte que de l'air est aspiré du compartiment moteur (8) par la dépressurisation créée sous l'habillage de dessous de caisse (3) pendant le déplacement du véhicule.

2. Habillage de dessous de caisse selon la revendication 1,
**caractérisé en ce que** la paroi inférieure (4) présente une face lisse vers l'extérieur.

3. Habillage de dessous de caisse selon la revendication 1 ou 2,
**caractérisé en ce qu'**une structure guidant l'écoulement est formée sur la face extérieure de la paroi inférieure (4).

4. Habillage de dessous de caisse selon l'une des revendications précédentes,
**caractérisé en ce que** des canaux d'écoulement s'étendant de manière orientée selon une direction longitudinale du véhicule automobile sont formés sur la paroi inférieure (4).

5. Habillage de dessous de caisse selon la revendication 4,
**caractérisé en ce que** les canaux d'écoulement divergent dans la direction longitudinale du véhicule automobile.

6. Habillage de dessous de caisse selon la revendication 4,
**caractérisé en ce que** les canaux d'écoulement convergent dans la direction longitudinale du véhicule automobile.

7. Habillage de dessous de caisse selon l'une des revendications précédentes,
**caractérisé en ce qu'**il se compose de plaques doubles nervurées.

8. Habillage de dessous de caisse selon l'une des revendications 1 à 6,
**caractérisé en ce qu'**il est réalisé sous la forme d'une pièce extrudée soufflée.

9. Habillage de dessous de caisse selon l'une des revendications précédentes,
**caractérisé en ce que** qu'il comporte, en plus du canal d'air (6) d'autres pièces fonctionnelles.

10. Habillage de dessous de caisse selon l'une des revendications précédentes,
**caractérisé en ce que** qu'un logement pouvant recevoir une pièce fonctionnelle est formé dans celui-ci.

11. Habillage de dessous de caisse selon la revendication 10,
**caractérisé en ce que** le logement est formé dans la paroi supérieure (5).

12. Habillage de dessous de caisse selon la revendication 10 ou 11,
**caractérisé en ce qu'**une pièce fonctionnelle peut être fixée de manière positive, au moyen du logement, entre un dessous de caisse de véhicule automobile (2) et l'habillage de dessous de caisse (3) par la fixation de l'habillage de dessous de caisse (3) sur le véhicule automobile (1).

13. Habillage de dessous de caisse selon l'une des revendications précédentes,
**caractérisé en ce qu'**un produit d'absorption du son est intégré dans celui-ci.

14. Habillage de dessous de caisse selon l'une des revendications précédentes,
**caractérisé en ce qu'**une section structurelle (12) est formée dans la paroi supérieure (5), des chambres creuses (13) étant ménagées dans la section structurelle (12), présentant des parois de chambre et ayant des formes de cases ou de gobelets.

15. Habillage de dessous de caisse selon la revendication 14,
**caractérisé en ce que**, lors de la fermeture par rapport à l'extérieur, les chambres creuses (13) font partie d'un volume d'air commun enfermé entre la paroi supérieure (5) et la paroi inférieure (4).

16. Habillage de dessous de caisse selon la revendication 14 ou 15,
**caractérisé en ce que** des soudures sont réalisées entre les parois des chambres de la partie structurelle (12) de la paroi supérieure (5) et de la paroi inférieure (4), entre la paroi supérieure (5) et la paroi inférieure (5), dans la zone des chambres creuses.

17. Habillage de dessous de caisse selon la revendication 16,
**caractérisé en ce que** les soudures s'étendent de manière ponctuelle ou linéaire et **en ce que** des chambres creuses (13) sont formées, dont les parois de chambre, pour une extension en hauteur sensiblement identique, sont en partie soudées sur la paroi inférieure (4) et en partie formées par des collerettes libres orientées en direction de la paroi inférieure (4) en laissant une fente entre une face frontale de la paroi de chambre et la paroi inférieure (4).

18. Habillage de dessous de caisse selon l'une des revendications précédentes,
**caractérisé en ce qu'**une transition intégrale est réalisée sur les bords entre la paroi supérieure (5) et la paroi inférieure (4).

19. Habillage de dessous de caisse selon la revendication 16 ou 17,
**caractérisé en ce que** les soudures s'étendent sous la forme d'îlots.

20. Habillage de dessous de caisse selon la revendication 16, 17 ou 19,
**caractérisé en ce que** les soudures sont disposées de manière décalée les unes par rapport aux autres.

21. Habillage de dessous de caisse selon la revendication 16,
**caractérisé en ce que**, dans le cas de soudures linéaires, des trajets disposés perpendiculairement les uns par rapport aux autres sont réalisés.

22. Habillage de dessous de caisse selon l'une des revendications 14 à 21,
**caractérisé en ce que** les chambres creuses (13) présentent des tailles différentes et/ou des hauteurs différentes.

23. Habillage de dessous de caisse selon l'une des revendications précédentes,
**caractérisé en ce que** la paroi supérieure (5) et la paroi inférieure (4) ont des épaisseurs de paroi différentes.

24. Habillage de dessous de caisse selon l'une des revendications précédentes,
**caractérisé en ce que** des lignes de pliage sont formées de manière correspondante dans la paroi supérieure (5) et dans la paroi inférieure (4).

25. Habillage de dessous de caisse selon la revendication 24,
**caractérisé en ce que** les lignes de pliage sont réalisées sous la forme d'une articulation par un film en matière plastique.

26. Habillage de dessous de caisse selon l'une des revendications précédentes,
**caractérisé en ce qu'**il présente un emplacement de fixation (B) plus épais.

27. Habillage de dessous de caisse selon l'une des revendications précédentes,
**caractérisé en ce que** sa matière a une densité supérieure à 150 kg/m³, jusqu'à 400 kg/m³.

28. Habillage de dessous de caisse selon l'une des revendications précédentes,
**caractérisé en ce que** sa matière est une matière synthétique chargée de fibres ou de produits minéraux.
